Europäisches Patentamt

European Patent Office

Office européen des brevets

(19)

(11) Publication number: **0 363 183**
**A1**

# EUROPEAN PATENT APPLICATION

(12)

(21) Application number: **89310167.5**

(22) Date of filing: **04.10.89**

(51) Int. Cl.⁵: **A01K 63/02.**

(30) Priority: **05.10.88 NZ 226469**

(43) Date of publication of application:
**11.04.90 Bulletin 90/15**

(84) Designated Contracting States:
**AT BE CH DE ES FR GB GR IT LI LU NL SE**

(71) Applicant: **HER MAJESTY THE QUEEN IN RIGHT OF NEW ZEALAND**
**Department of Scientific and Industrial Research Head Office Public Trust Building Lambton Quay**
**Wellington(NZ)**

(72) Inventor: **Jerrett, Alistair Renfrew Dep. Scien. & Ind. Res.**
**Head Office Public Trust Building Lambton Quay Wellington(NZ)**

(74) Representative: **Cook, Anthony John et al**
**D. YOUNG & CO. 10, Staple Inn**
**London, WC1V 7RD(GB)**

(54) **Fish transport method and apparatus.**

(57) A method of, and apparatus for, transporting live fish is disclosed. The method involves sealing the live fish in a transport container (50, 51) which contains the transport water and a water processing/recirculation unit (1). Several configurations of processing/recirculation unit are described. A source of oxygen is also located within the sealed container with the end result that the fish may be maintained in an immobile hypnotic-like state during transport.

EP 0 363 183 A1

## FISH TRANSPORT METHOD AND APPARATUS

This invention relates to a method of and/or apparatus for transporting fish in the live state.

It is an object of the invention to provide a method of and/or apparatus for transporting fish in the live state which will at least provide the public with a useful choice.

Accordingly, in a first aspect, the invention consists in a method of transporting live fish, said method comprising the steps of sealing said fish in a container in a manner such that:

(i) the fish are retained against substantial movement; and

(ii) the gills of the fish are immersed in water; and treating the aqueous and gaseous conditions in the sealed container to ensure that the fish are maintained in a passive state while transporting said fish to the desired destination.

In a second aspect the invention consists in fish transport apparatus said apparatus comprising a sealable container able to contain fish and water in a manner such that:

(i) the fish are restrained against substantial movement; and

(ii) the gills of the fish are immersed in water; and means to treat the aqueous and gaseous conditions within said sealed container to ensure that fish retained within said container are maintained in a passive state.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

One preferred form of the invention, and modifications thereof, will now be described with reference to the accompanying drawings in which:

Figure 1 shows a schematic diagram of a first form of water treatment/recirculation unit suitable for use in fish transport apparatus according to the invention;

Figure 2 shows a schematic section of a second form of water treatment/recirculation unit;

Figure 3(a) shows a more detailed schematic side elevation view of one form of turbine impeller/aerator assembly as incorporated in any of the units shown in Figures 1, 2 or 4;

Figure 3(b) shows a schematic end elevation view of the assembly shown in Figure 3(a);

Figure 4 shows a schematic cross section of a third form of water treatment/recirculation unit;

Figure 5 shows an elevational view, party in section of a fourth form of water treatment/recirculation unit;

Figure 6(a) shows a plan view of the base of moulded packaging container forming part of apparatus according to the invention;

Figure 6(b) shows a plan view of the underside of a lid intended for use with the base shown in Figure 6(a);

Figures 7(a) to 7(d) show longitudinal sections through each of the fish retaining cavities in the container shown in Figures 6(a) and 6(b);

Figure 8 shows a lateral section of the container along the axis B-B of Figure 6(a); and

Figures 9(a) and 9(b) show preferred forms of oxygen supply for use in the system according to the invention.

The invention provides a method of, or an apparatus for, transporting live fish, or both, which includes the provision of a transportation environment able to induce in the fish what may be called the Piscine Immobility Syndrome or "fish immobility reflex". When in this state the fish adopt a hypnotic-like trance. We have established that this phenomenon requires that the gross environmental parameters, such as dissolved oxygen, ambient water temperature, sound levels, light intensity, nitrogenous wastes, water osmolarity, ionic composition and carbon dixoide be controlled to within the physiological tolerances of the animals.

The various forms of water treatment/recirculation system according to the invention are designed to maintain certain of the parameters within designed limits and thus maintain the animals in an environment that allows them to remain in a relaxed, fit state. By ensuring this occurs we have found that the resistance of the animals, while being transported, to common transportation events such as brief temperature shocks or severe physical vibration and motion, is increased.

Typically the water processing unit achieves at least some of the following:

(i) Maintains dissolved oxygen concentrations near 100% saturation at sea level when transporting fish of the designed weight and species.

(ii) Recirculates, mixes and directs the transported water.

(iii) Controls dissolved $CO_2$ concentrations by absorption from the gas phase.

(iv) Controls volatile nitrogenous wastes by absorption from the gas phase. In addition to this the preferred form of the apparatus can provide a means of deploying absorptive (or in any other way detoxifying) material in contact with the recirculated gas phase.

(v) Regulates the transport water pH by con-

trolling $CO_2$ concentrations in the water. In this regard it should be noted that the concentration of un-ionised $NH_3$ in the transport water is largely controlled by resting and starving the animals prior to transportation. The ammonia produced by endogenous (or basal) ammonia excretion during the transportation period exists in its less toxic form ($NH_4 +$) at the operating transport water pH of this system.

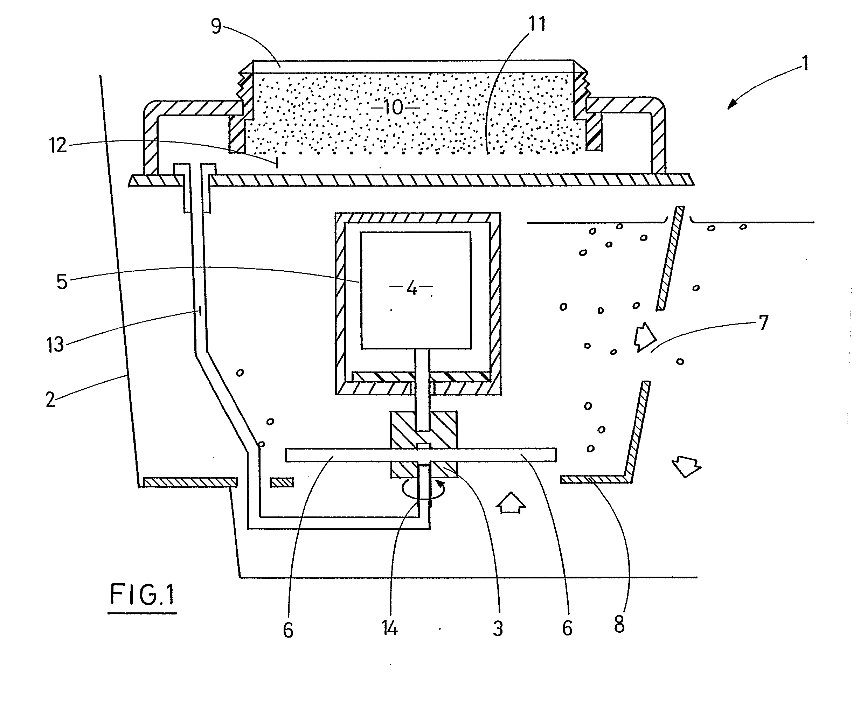

Referring now to the drawings, Figure 1 shows a schematic diagram of one form of water treatment/recirculation unit 1 according to the invention. This unit 1 is at least partially immersed in the water within transport container 2. The unit 1 includes a simple impeller 3 to circulate the water, the impeller 3 being driven by electric motor 4. The motor 4 is contained within a sealed cavity 5 forming part of the unit 1. The impeller 3 has hollow blades 6 through which gases, captive in the transport package, are distributed into, and then mixed with, the transport water. The well mixed water and gas is then distributed to the fish (not shown) via outlet apertures 7 in the base 8 of the unit 1. Any gases present in the system rise to the surface of the contained water and are recirculated through a gas permeable, water impermeable PTFE (TEFLON TM) tortuous pore membrane 9 then through a granular absorber bed 10. This bed 10 rests on a mesh screen 11.

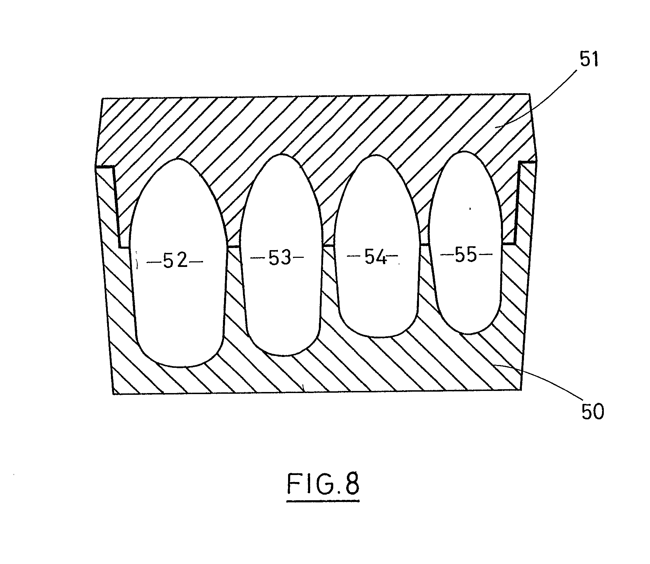

The composition of the bed 10 is open to modification depending on the requirements of the transported animals. We have found that approximately 120 to 160 grams of 10-12 mesh soda lime (MEDISORB TM or CARBOSORB TM) is the preferred bed packing material. This material gives a controlled decrease in water pH with time by absorbing free $CO_2$, while in conjunction with the oxygen supply (Figure 8), it appears to deodorise the recirculated gas and therefore, to an extent, the transport water. Other materials we have used in this bed have included activated carbon (IONAC P50), acid and alkali rinsed activated carbon and attapulgite odour absorbents. The bed 10 does not completely remove all free $CO_2$ from the system, the effect of which will be described hereinafter.

When using the unit 1 shown in Figure 1 it is also desirable to add 1.5 - 2.0 mls of a food grade, silicone antifoam to the transport water. We have used DOW CORNING (TM) DC1500 or ANTIFOAM A. The antifoam agent prevents undesirable foam formation, is mildly bacteriostatic and reduces the residence time of the gases in the water by increasing the gas bubble size. Large numbers of small bubbles are undesirable in that they can interfere with the gas exchange across the gills of the fish.

In use, the impeller 3, rotated by motor 4, draws gases within the transport container through the membrane 9 and through the absorber bed 10 into plenum 12. The gas is then drawn down conduit 13 and into the hollow blades 6 of the impeller through rotating coupling 14. The gases then pass out through the tips of blades 6 to be mixed with the water which is directed to the fish.

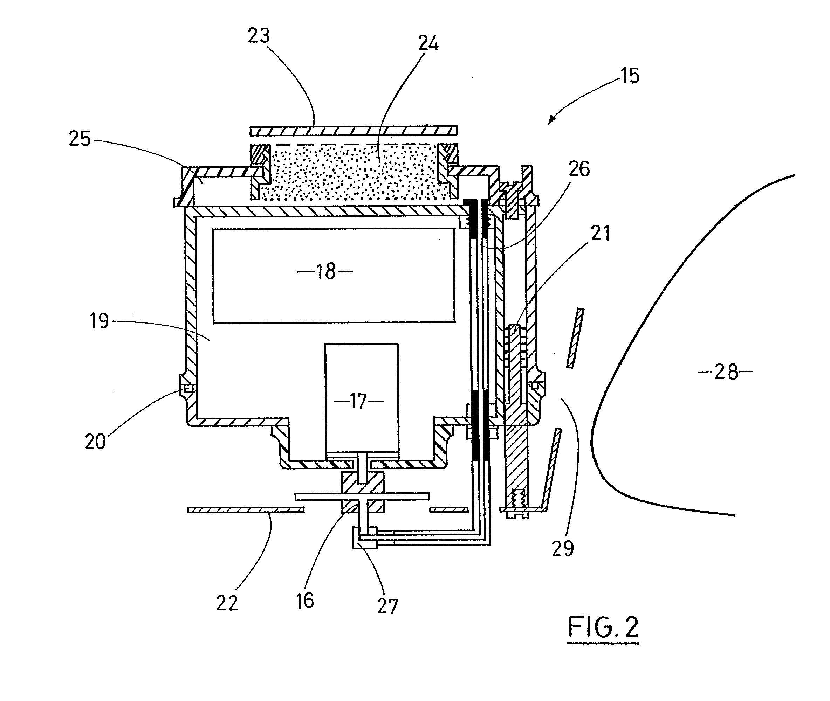

Figure 2 shows a schematic section of an alternative form of water treatment/recirculation unit 15 for use in the invention. The unit 15 is also based around an electrically driven impeller/aerator 16. The unit 15 drives the impeller 16 with a high efficiency, low radio frequency noise, direct current motor 17 (in this case a PHILIPS (TM) high torque, ironless rotor type). The motor 17 is powered from a battery 18 which is preferably a Chloride POWERSTORE (TM) 6 Volt, 10.5 amp hour rating, sealed lead-acid battery. The motor 17 and battery 18 are sealed within chamber 19. The inner walls of the chamber 19 are preferably lined with aluminium, self adhesive tape to provide additional radio frequency interference shielding. Access to the chamber 19 is effected via the gasket-sealed joint 20 with the seal being secured by the leg/joint securing bolt assembly 21. The leg/joint assembly 21 (only one of four shown) supports the unit and provides the attachment site for the base plate 22 to the unit. Under the influence of the rotating impeller 16 the gas within the fish transport container is drawn down through the tortuous pore PTFE membrane 23 retained by a screw-on plastic cap (not shown), through the absorber bed 24, into the plenum 25 and down conduit 26 to the impeller/aerator assembly 16. The conduit 26 is preferably silicone rubber tubing connected to the base of the impeller 13 through a rotating coupling 27. The water pumped by the impeller 13 is distributed to each of the fish 28 via apertures 29 in the base plate 22.

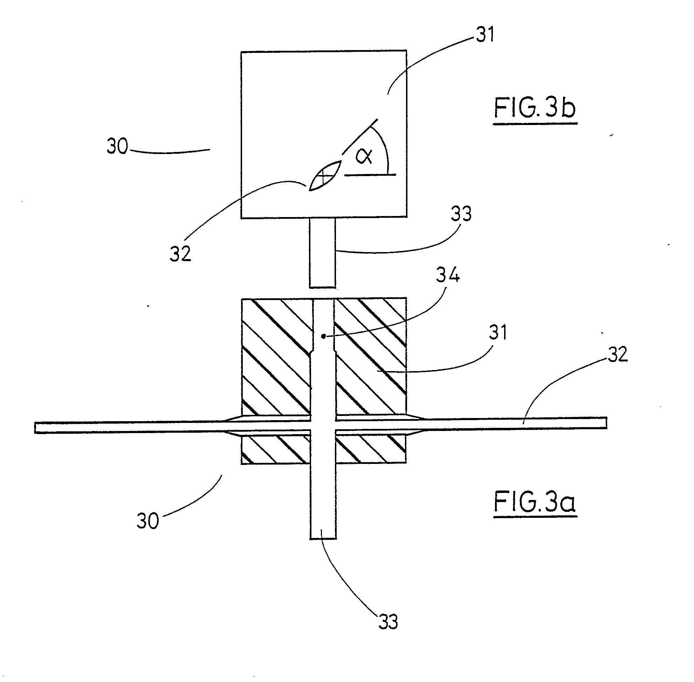

Figures 3a and 3b show more detailed schematic views of a suitable turbine impeller/aerator assembly 30 for the configurations of unit shown in Figures 1, 2 and 4. The body 31 of the assembly 30 is made of a suitable corrosion resistant, engineering plastic, in this case DELRIN (TM). The hollow impeller blades 32 and the hollow central gas distribution shaft 33 are made of stainless steel and may be press-fitted into the body 31. The assembly is mounted on the output shaft of the motor (not shown) by press-fitting the output shaft into the central bore 34.

The power consumption, volume of gas introduced into the water, gas bubble size and water volume pumped are controlled by such factors as the impeller diameter, blade width, blade thickness, profile of the blade, blade angle of attack, shape of the blade tips and restrictions to gas flow within the unit as a whole. In the assembly shown in Figures 3(a) and 3(b), fine adjustments in power consumption, aeration and water pumping volume can be made by adjusting the angle of attack of the impeller blade 5. Thus this basic unit can be tailored to suit a wide range of operating requirements with minimal changes to the basic design.

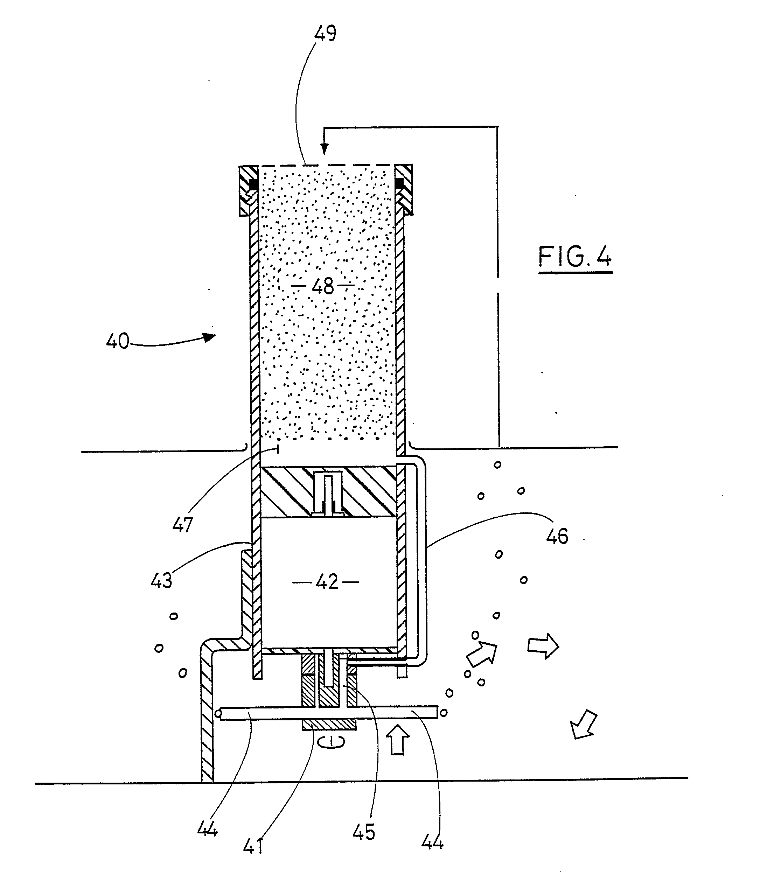

Figure 4 shows yet a further alternative, simplified version of suitable water treatement/recirculation unit 40. The unit 40 performs all of the functions of the units shown in Figures 1 and 2 but uses an external dry cell battery as the power supply (battery and leads not shown) The casing and general design is simplified to reduce unit complexity and decrease the cost of manufacturing the unit. Thus impeller 41 is driven by electric motor 42 sealed within the lower section of casing 43. The impeller 41 is preferably of substantially the same configuration as that depicted in Figures 3(a) and 3(b) except that in this particular form, the recirculated gas is fed to the hollow blades 44 through arcuate chamber 45 included in the hub of the impeller. The chamber 45 is supplied from conduit 46 leading from plenum 47, the plenum 47 being situated beneath absorber bed 48. As with the previous examples a PTFE membrane 49 is provided over the top of the bed 48 so as to prevent water contamination.

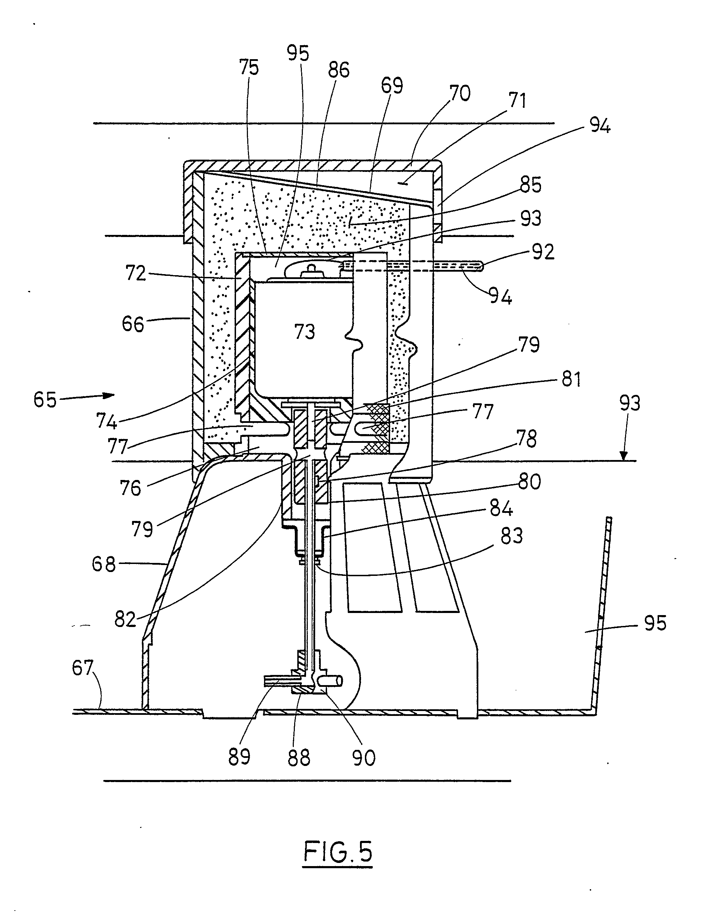

Referring now to Figure 5 a still further form of water treatment/recirculation unit 65 is shown. The unit 65 is a variation of the unit shown in Figure 4 in that it draws its power from a battery source (not shown) located outside the transport container. As will be described in greater detail below the unit also employs an alternative configuration of impeller.

In the form shown the unit 65 comprises a main body 66 supported on base plate 67 by way of support skirt 68. The upper end 69 of the main body is formed at an angle so that, in combination with top cap 70, an air space 71 is defined between the end 69 and the inner surface of cap 70.

A motor housing 72 is located centrally within the interior of main body 66. An electric motor 73, which may be of the form previously described, is, in turn, mounted within the motor housing 72 and is retained therein by the use of epoxy resin 74. The resin 74 is poured, in liquid form, around the motor 73 when located within the housing 72 so that, upon setting, the motor is fixed within the housing. A top plate 75 covers the upper end of the motor housing 72 thus sealing the motor off from the environment around the housing 72.

A cavity 76 is defined in the lower end of the motor housing 72 and one or more ports 77 are formed in the wall of the housing 72 so that the interior of the main body 66 surrounding the motor housing 72 may communicate with the cavity 76 and thus with hub 78 which is mounted on the outlet shaft 79 of the motor 73.

As can be seen the hub 78 includes a radial passage 79 extending therethrough and mounts a holllow drive shaft 80. The arrangement is such that the interior of drive shaft 80 communicates with radial passage 79.

A mesh screen 81 surrounds the bottom end of the motor housing 72 so as to overlie the ports 77.

The mounting skirt 68 includes a centrally disposed, downwardly extending annular spigot 82 which partially receives the hub 78 although the hub 78 is free to rotate therein. A sliding seal 83 rides on the drive shaft 80 and is supported on flexible boot seal 84 which, in turn, is mounted on the outer surface of spigot 82.

The interior of the main body 66 surrounding the motor housing 72 is packed with granular absorbent material 85 which may be of the same composition as that forming the absorber beds 9, 12, and 48 described above. The mesh 81 prevents the granular material from passing through the ports 77. A tortuous pore gas permeable, water impermeable PTFE (TEFLON TM) membrane 86 is. engaged over the upper end 69 of the body 66 so as to prevent water entering the absorber bed.

Mounted on the lower end of drive shaft 80 is an impeller or rotor 88. This particular configuration of rotor 88 has three short blades 89 press fitted within the rotor hub 90 at spacings of 120°. The hub 90 may be formed from suitable engineering plastics material and it will be evident that the hub provides for a gas flow channel between the interior of the blades 89 and the cavity 76 provided at the lower end of the motor housing 72 via the radial passage 79 and the hollow interior of drive shaft 80.

The motor 73 is, as described above, powered from external batteries (not shown). These batteries may be of the disposable type (e.g. two EVEREADY 1209 batteries in series) and power from the batteries is supplied to the motor 73 through a supply umbilical 92 which passes through the wall of the container in a sealed fashion. The umbilical 92 surrounds the power supply cables 93 and also includes an air bleed pipe 94 which provides an air pressure balance to the cavity 95 within the motor housing 72 and above the motor 73. We have found that, without the pressure balance provided by air line 94, the vacuum drawn in cavity 76 by the actuation of the rotor 88 can draw water past seal 83 and through the motor seals and into the motor 73.

The configuration of unit shown in Figure 5 is intended to be powered by a 12 volt power source and, at this voltage, draws a current of around 100 to 150 milliamps. The higher speed of operation means that the span of the rotor 88 is reduced when compared with the span of the impellor depicted in Figures 3(a) and 3(b).

A further advantage of the unit shown in Figure 5 is that the motor itself is located above the normal water level 93 within the container and thus, providing the effects of vacuum can be compensated for, the problems of preventing water ingress into the motor are substantially reduced.

Upon operation of the unit shown in Figure 5 by supplying power to the motor 73, gases above the water level 93 are drawn through port 94 formed in the cap 70, through the tortious pore membrane 86 and through the absorber bed 85. The gases are then drawn down through the absorber bed 85, past the mesh 81 and through the ports 77 formed in the lower end of motor housing 72. The purified gases are then drawn through radial passage 79 in the hub 78, down through hollow drive shaft 80 and are distributed through the hollow blades 89 of the rotor 88. The treated gases are then directed to the contained fish (not shown) through delivery apertures 95 in the base member 67.

Whatever the form of water treatment unit, the pH level in the sealed container is a function of free $CO_2$ concentration and can be used to determine $CO_2$ levels in the container. The uptake of $CO_2$ by the absorber bed 9, 21, 48, 85 is a function of the circulation rate and the bed capacity. Seawater has a pH of approximately 8.3 and for typical configurations described herein this slowly reduces over a 4 to 10 hour period to about 6.4. Thus the free $CO_2$ concentration in the transportation water and gas which is produced as a metabolic by-product of the animals, slowly increases with time and we have found that this build up of $CO_2$ concentration is desirable in that it induces, and maintains, a state of mild sedation in the animals.

The method and apparatus described slowly induce light $CO_2$ anaesthesia, or sedation, while the fish are exhibiting the piscine immobile response. Thus the capacity of the absorber bed 9, 12, 48, 85 is determined having regard to the expected output of $CO_2$ from the transported fish to ensure the increase in $CO_2$ concentration as outlined. The level of $CO_2$ sedation which results cannot produce quiescent fish by itself. However, when this sedation is combined with the immobility response, it produces an animal less responsive to degrading environmental conditions than animals dependent on the piscine immobility response alone.

Mild sedation of the animals, using anaesthetics approved by the health authorities (for example, ethanol), can be useful but can prevent the animals settling into the immobile response if the chemical is in any way stressful to the animals. Gradual release of the sedative could overcome these acclimation problems. As the system stands, $CO_2$ sedation is the preferred form of supplementary sedation.

The preferred form of the invention may further include mild cooling of the transport water to below the current acclimation temperature of the animals. Mild cooling of the poikilothermic animals prior to transport is generally found to be beneficial in that it reduces the metabolic rate, activity level and excitability of the animals. The degree of cooling is species dependent and depends on the desired results to be achieved. In addition to cooling their transport water the fish are preferably starved and rested for between 24 hours and 1 week, preferably about 48 hours, prior to shipment. This period can be spent in tanks or the "iki-bins" found on board catch-boats.

Induction of the piscine immobility phenomenon also requires some form of yielding physical restraint. Most marine and freshwater animals are completely fluid supported throughout their life cycle. This means that their skin and tissues are easily damaged by contact with solid surfaces. The constraining packaging must be as supportive, non-abrasive and free from potential pressure points as possible. The constraining packaging must also allow the animal the ability to reduce discomfort due to pressure points, by limited movement. We have found that a form fitting, padded cavity with approximately 5mm to 10mm clearance between the outer dimensions of the animal and the padded surface will most effectively produce the immobility response. This form of constraint also has the advantage of minimising the water volume required to maintain respiration and support the body of the animal in a cushioning fluid medium. The water level need only cover the gills of the animal which is especially important while minimising the water volume around deep bodied species such as snapper (Chrysophrys auratus). If the fluid medium does not completely cover the body of the animal then the lower lateral and ventral surfaces of the constraining packaging must support and cushion the animal against forces acting largely on the mass of the animal unsupported by fluid.

Some species may require direct irrigation of the gills to induce the immobile state. Species which require this are generally fast moving, active species. Direct irrigation of the gills also requires that the irrigating fluid be largely free of suspended material and bubbles. The preferred form of the present apparatus has been initally developed and refined for snapper which do not require direct gill irrigation and are therefore more tolerant to the presence of suspended material and bubbles. Constraint is also required for animals that require gill irrigation in order to reinforce the gill irrigation stimuli and to minimise transport water volume.

In general, we have found that vigorously recirculated water (preferably directed at the head of the animal) will enhance initial immobile response.

As described herein the transport container is preferably designed to:

(i) Provide a suitable environment for the induction of the immobile response;

(ii) Provide a form fitting, cushioned and supportive environment for the fish while minimising transport water volume around the fish;

(iii) Be of light weight, yet comply with IATA and local airline regulations on box strength and leak proofing; and

(iv) Provide thermal, noise, pressure and physical shock protection for the transported animals.

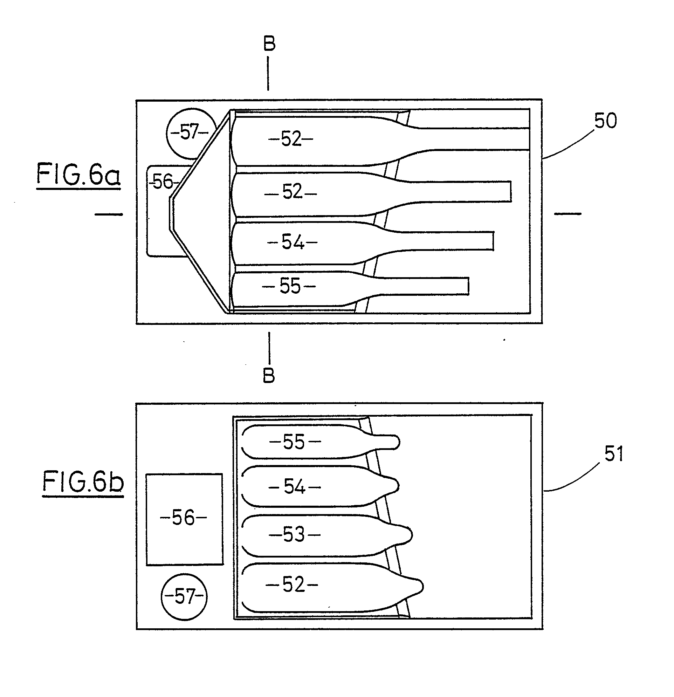

Figures 6(a) and 6(b) show plan views of a typical moulded constraint/packaging box base 50 and lid 51 constructed of, for example, polystyrene. Obviously the underside of the lid 51 is shown. This box and lid contains four cavities 52-55 designed to accommodate four different size ranges of fish, in this case snapper. This configuration will transport snapper in the 1.0 kg to 2.5 kg size range. Other configurations may accommodate different numbers of fish and/or different sizes. The container also includes a cavity 56 in which the water treatment/recirculation unit 1, 12, 40 or 65 is positioned and a cavity 57 in which an oxygen supply, to be described later, is positioned.

When moulded of polystyrene the box 50 can be readily disposed of if not required for re-use.

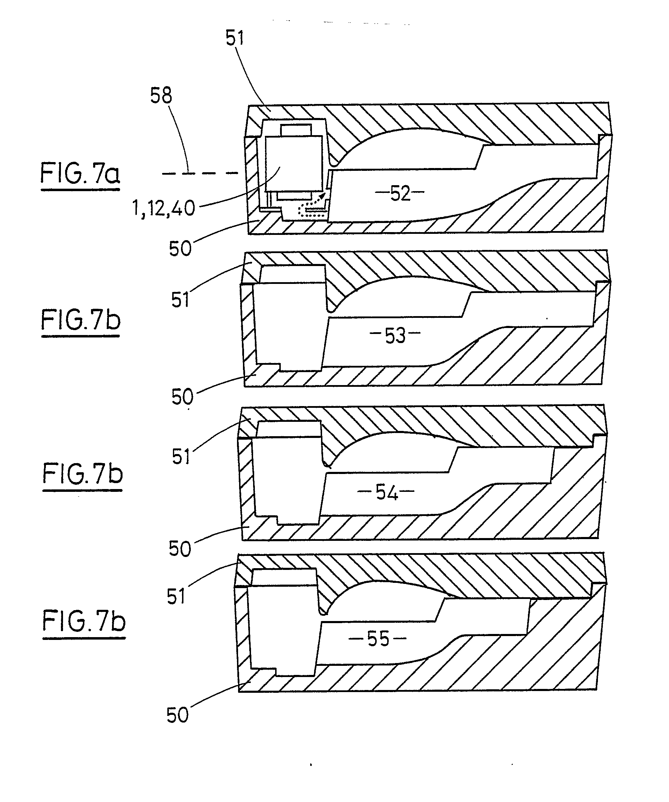

Figures 7(a) to 7(d) show longitudinal sections through each of fishing cavities 52-55 defined when base 50 and lid 51 as shown in Figures 6(a) and 6-(b) are combined. As can be seen the cavities are shaped to support the ventral surfaces of the fish. The cavities are further sized to permit the fish some limited degree of movement so that the fish can, while accomodated in the cavities relieve stress points through movement. Figure 7(a) also shows the position of the water treatment unit 1, 12, 40, 65 in the container and the typical transport water level 58.

Figure 8 shows a section of the transport container along the axis B-B of Figure 6(a). Again it shows the individual fish cavities 52-55 and the container lid 51 and container base 50. The fish cavities 52-55 are preferably lined with "bubble plastic" (not shown) This is a commonly available packing material which is constructed from a sandwich of polythene sheets between which small (typically 1.0 cm diameter) bubbles of gas are trapped. Other lining materials may be used but we have found that this material provides a good combination of support and cushioning while minimising surface contact with the delicate skin of the fish.

After loading the fish the base/lid joint of the transport container polystyrene is sealed with self-adhesive tape and the container placed within two 75 micron polythene bags. These bags contain any seapage from the transport container and are, in turn, sealed with rubber O-rings. The whole assembly is placed within a heavy cardboard box which protects the integrity of the container and polythene bags and adds to the insulation of the system.

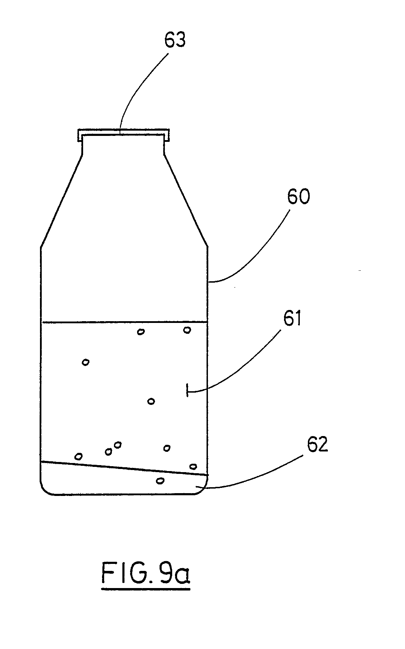

Figure 9(a) shows one preferred form of oxygen supply for the system. Since the system is totally sealed the oxygen consumed by the animals must be replaced. The oxygen supply used in this system was developed to be safely carried by air.

In the form shown it consists of a disposable plastic bottle 60 within which is contained a volume of 40% hydrogen peroxide solution 61. The bottle is sized to fit within cavity 57 provided in the container described above. The hydrogen peroxide is catalytically broken down to water and oxygen by contact with a suitably active material 62. In this case we use about 200 mls of the peroxide solution and about 12 grams of BDH ANALAR (TM) calcium hydroxide as the catalyst. This provides a temperature dependent, slow, production of oxygen over a 48 hour period. The rate (typically 2 to 6 mls per minute) can be altered by controlling the peroxide concentration, the surface area, grade and volume of the catalyst and the working temperature of the system. The oxygen is released from the bottle through a gas permeable, tortuous pore, PTFE membrane 63 similar to the membrane used to waterproof the absorber bed 21 (Figure 2).

It will be appreciated that the peroxide can be degraded in a number of ways including the use of alkaline solutions (and providing sites for the catalytic breakdown to occur such as stainless steel mesh) or the use of commonly documented activators and inhibitors of the reaction in concert. The method we have developed for use in this configuration is simple, reliable, inexpensive and can be easily tailored to a range of transport applications.

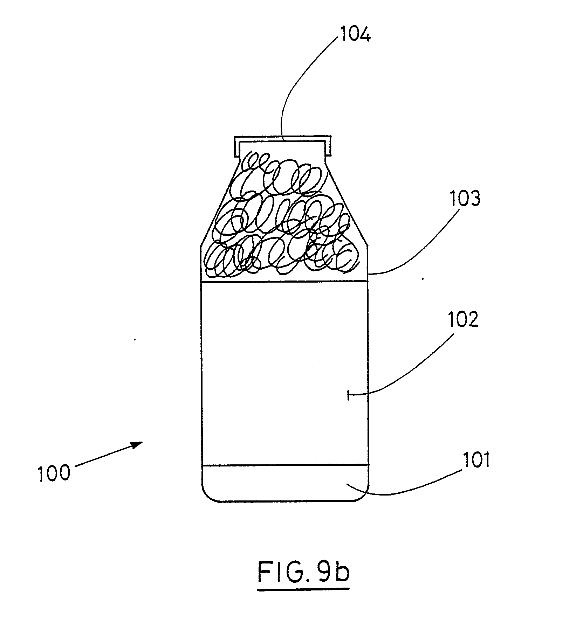

An alternative configuration of oxygen supply is shown in Figure 9(b). Once again this form of supply is contained within a disposable plastic bottle 100 which is sized to fit within cavity 57 provided in the container described above. Approximately 20 grams of 14/40 HAYCARB activated carbon 101 are placed in the bottom of the bottle 100. 310 grams of sodium perborate tetrahydrate are mixed with a further 20 to 30 grams of HAYCARB activated carbon and the resulting dry mixture is then poured into the bottle to provide a layer 102 on top of the layer 101 of activated carbon. A loose plug 103 of polyester wool is then packed on top of the layer 102 and the bottle, containing the dry ingredients, is then sealed with a cap 104 until activation.

The generation system is activated by the addition of approximately 80 to 120 mls of distilled water. After addition of the water the cap 104 is replaced and several holes (not shown) are punched in the cap with a 27 gauge spike to release the oxygen which is generated. We have found that approximately six holes are quite sufficient, the precise number not being critical. The relatively small hole size together with the internal positive pressure generated within the container 100 are sufficient to prevent the contamination of the contents by the transport water. The polyester wool keeps the layers 101 and 102 substantially together under the influence of the reaction which releases the oxygen.

The rate of oxygen generation will vary with time but we have found that using the perameters identified above the rate of generation is, on average, about 6 mls of oxygen per minute for the first 35 hours of operation.

The rate of oxygen generation can be varied by altering the proportion of carbon, perborate, and distilled water. Further, the rate can be reduced by making the initial compound more acidic. For example, boric acid powder may be added to the dry mix to slow down the rate of oxygen generation.

It will be appreciated that the addition of water to the perborate causes the perborate to decompose releasing hydrogen peroxide which, in turn, decomposes in the alkaline conditions releasing oxygen. Further, the peroxide is catalytically broken down when it contacts the activated carbon into water and oxygen.

It will also be appreciated that the oxygen could be supplied from miniature cylinders or other chemical methods. However we prefer the described method because of its simplicity, low volume/weight ratio and cost-effectiveness in relation to the volume of oxygen supplied.

Typically, apparatus of the type hereinbefore described, when configured to transport Snapper (Chrysophrys auratus) has the following characteristics

(i) 40 hour normal operational life.
(ii) Totally sealed unit operation.
(iii) 6 to 9 litres of filtered seawater per package.
(iv) 4 to 7.5 kg of snapper per package.
(v) Total package weight of under 20 kg.
(vi) Approximately 1.2 to 1.8 Watts power consumption.
(vii) Power source either a rechargeable sealed lead acid battery or a dry cell battery.

Thus it can be seen that a method, or an apparatus, or both, are provided by the invention, which provides an efficient, safe method of transporting, (for example airfreighting), live, edible fish, especially large (for example 1.0 to 2.5 kg), delicate marine fish species, to distant markets.

The induction of a passive, relaxed state in the transported animals can be achieved without using anaesthetics, some of which are not approved by health authorities (such as the U.S. F.D.A.) for use with edible species.

A passive, inactive and preferably relaxed state in the transported fish is advantageous for one or more of the following reasons:

(i) In an immobile state the fish consume the minimum amount of oxygen and excrete the minimum amount of metabolic waste products such as carbon dioxide, mucoid or other proteinaceous materials and nitrogenous wastes. This places less load on any water recirculation system designed to minimise levels of harmful waste products and maximise dissolved oxygen levels.

(ii) A passive, relaxed animal conserves its own metabolic resources while minimising its requirements from the sealed recirculation environment. The animal is thus much more likely to survive any stressful episodes in the transportation process (for example, physical or temperature shocks).

It is common practice when transporting fish to drug or in some way anaesthetise the animals, to induce a passive or inactive state. Chemical methods of anaesthesia generally have a number of disadvantages in that the depth of anaesthesia is often difficult to control, and the chemicals are generally unsuited for prolonged exposure and are often residually toxic to humans who may consume the fish within days of exposure. Thermal or "cold" anaesthetic techniques do not have any residual toxicity problems but it is often difficult to estimate the depth of anaesthesia and to maintain the animals at a constant, sub-ambient temperature during transportation. General anaesthesia, however it is induced, has one major drawback in that the lack of responsiveness exhibited by the fish can mask any symptoms of physiological distress caused by an inadequate transportation environment.

The described particular embodiment of the invention can overcome some or all of these disadvantages.

Further, the disclosed transportation method and apparatus is completely sealed. This has the advantage of safely containing potentially corrosive transportation solutions, such as sea water, and of isolating the fish from rapid fluctuations in the external environmental conditions, i.e., temperature, pressure, humidity and noxious gases (such as car exhausts, etc).

The apparatus provides a very low weight and volume to fish ratio in order to reduce airfreight costs, and can be designed to comply with IATA (or individual airline) freight regulations for international passenger aircraft.

The disclosed method and apparatus has a normal operational life of about 40 hours but can be easily adapted to lesser or greater transport durations (up to 60 hours). The exact duration depends on the animal/fish type, the transport application, and the extent of water treatment required.

The method or apparatus can be applied to a wide range of marine and freshwater animals. This is accomplished by modifying the configuration of the system to suit the body conformation, packing density and basic metabolic requirements of the animal being transported.

The described method and apparatus are also cost effective.

## Claims

1. A method of transporting live fish wherein said method comprising the steps of sealing said fish in a container in a manner such that:

    (i) the fish are retained against substantial movement; and

    (ii) the gills of the fish are immersed in water; and treating the aqueous and gaseous conditions within the sealed container to ensure that the fish are maintained in a passive state while transporting said fish to the desired destination. 2. A method as claimed in claim 1 wherein said method includes inducing piscine immobility syndrome, as herein defined, in the fish. 3. A method as claimed in claim 1 or claim 2 wherein said fish are rested prior to placement in said container. 4. A method as claimed in any preceding claim wherein said fish are deprived of food prior to placement in said container. 5. A method as claimed in any preceding claim wherein the water in said container is mildly cooled to a temperature below the normal acclimated temperature of the fish. 6. A method as claimed in any preceding claim wherein said method includes mildly sedating the fish during transportation. 7. A method as claimed in claim 6 wherein said fish are mildly sedated by slowly increasing the concentration of free carbon dioxide within the sealed container when said fish are in the passive state.

8. A method as claimed in claim 7 wherein the concentration of free carbon dioxide is allowed to increase by limiting the ability of the system to absorb carbon dioxide.

9. A method as claimed in claim 7 or claim 8 wherein the concentration of free carbon dioxide is raised to a level which is insufficient, in itself, to induce a passive state in said fish.

10. A method as claimed in any preceding claim wherein (a) the fish are retained in a state of darkness when sealed within said container; or (b) said method includes the steps of generating an oxygen supply within the container when sealed; or (c) the oxygen is generated by degrading hydrogen peroxide in solution.

11. Apparatus for transporting live fish, said apparatus including a sealable container able to contain fish and water in a manner such that:

    (i) the fish are restrained against substantial movement; and

    (ii) the gills of the fish are immersed in water; and means to treat the aqueous and gaseous conditions within said sealed container to ensure that fish retained within said container are maintained in a passive state.

12. Apparatus as claimed in claim 11 wherein said container is a moulded container.

13. Apparatus as claimed in claim 12 wherein said container is moulded from polystyrene.

14. Apparatus as claimed in any one of claims 13 to 15 wherein (a) said container includes cavities constructed and arranged to retain said fish substantially in the normal swimming configuration yet allow the fish some degree of movement; or (b) said apparatus includes means to generate oxygen within the container; or (c) said means to generate oxygen comprises a source of hydrogen peroxide and means to convert said hydrogen peroxide into oxygen and water; or (d) said apparatus further includes means to oxygenate the water within said container.

15. Apparatus as claimed in claim 14 wherein said means to oxygenate said water comprises impeller means.

16. Apparatus as claimed in claim 15 wherein the gaseous environment within said container is circulated by a pressure difference created by said impeller means and distributed through the blades of said impeller means.

FIG.1

EP 0 363 183 A1

23

24

25

15

26

21

—18—

19

20

—28—

—17—

29

22

16

27

FIG.2

31

FIG.3b

30

α

32

33

34

31

32

30

FIG.3a

33

FIG. 4

FIG.5

FIG.6a

B

—57—

—56—

—52—

—52—

—54—

—55—

50

B

FIG.6b

—55—

—54—

—53—

—52—

—56—

—57—

51

FIG.7a

FIG.7b

FIG.7b

FIG.7b

FIG.8

FIG.9a

104

103

102

101

100

FIG. 9b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-2182231 (TONG-SHENG CHEN)<br>* page 1, lines 69 - 75 * | 1-16 | A01K63/02 |
| Y | EP-A-0202952 (NEW ZEALAND GOVERNMENT PROPERTY CORPORATION)<br>* page 3, lines 22 - 26 *<br>* page 4, lines 6 - 10 *<br>* page 8, lines 4 - 10 * | 1-16 | |
| Y | US-A-2652807 (WASHBURN)<br>* column 2, line 50 - column 3, line 10 *<br>* column 4, lines 25 - 37 * | 1-16 | |
| Y | US-A-2680424 (BROWN)<br>* figures 1-3 * | 1-16 | |
| A | FR-A-2572252 (MARTIN)<br>* page 2, lines 4 - 28; figures 6, 7 * | 1, 5, 10-14 | |
| A | US-A-3306256 (LEWIS)<br>* column 2, lines 9 - 70 * | 1, 3, 5, 10-14 | TECHNICAL FIELDS SEARCHED (Int. Cl.5 ) |
| A | BE-A-819132 (DOUTRELEPONT)<br>* claim 21 * | 1, 5, 6, 10-15 | A01K |
| A | DE-C-93545 (VON STIEGLITZ)<br>* figures 6, 7 * | 1, 11, 14-16 | |

The present search report has been drawn up for all claims

| Place of search | Date of completion of the search | Examiner |
|---|---|---|
| THE HAGUE | 25 JANUARY 1990 | BEUGELING G. L. H. |